# EUROPEAN PATENT SPECIFICATION

(11) **EP 1 092 462 B1**
(45) Date of publication and mention of the grant of the patent: **05.07.2006**
(21) Application number: 00121819.7
(22) Date of filing: 06.10.2000
(51) Int. Cl.: B01D 29/21, B01D 29/58, B01D 29/66, B01D 29/90, B01D 29/94, B01D 29/54, B01D 29/92, B01D 29/15

(54) **High capacity filter**
Filter hoher Kapazität
Filtre à grande capacité

(30) Priority: 12.10.1999 US 416676
(43) Date of publication of application: 18.04.2001
(73) Proprietor: FLEETGUARD, INC., Nashville, Tennessee 37214 (US)
(72) Inventor: Wagner, Brian K., Stoughton, Wisconsin 53589 (US); Schwandt, Brian W., Fort Atkinson, Wisconsin 53538 (US); Verdegan, Barry M., Stoughton, Wisconsin 53589 (US); Graber, Julie A., Cygnet, Ohio 43413 (US); Burger, Eric W., Carey, Ohio 43316 (US); Schoonover, Christopher A., Lima, Ohio 45805 (US); Fitzpatrick, Edward J., Findlay, Ohio 45840 (US)
(74) Representative: Gesthuysen, von Rohr & Eggert

(56) References cited:
- EP-A- 0 711 588
- EP-A- 0 844 013
- EP-A- 0 860 604

## Description

The invention relates to fluid filters, and more particularly to high capacity filters.

The invention arose during continuing development efforts toward satisfying customer demands for increased filter capacity within the same physical size constraints, and to extended service intervals. It is known in the prior art to provide an outer wrap of one or more layers of porous filter media as a prefilter around a main filter element.

Document EP 0711588 A shows a filter element with an outer wrap extending down to the bottom end of the upstream dirty side of the filter element. An inlet gap at the upper end of the filter element directs large size contaminants into said filter element.

Document EP 0860604 A discloses a filter element with an outer wrap in the form of a mesh, large openings are formed at the outer wrap also for directing big solid particles into the main filter element.

In the present invention, the outer wrap is stopped short of the end of the main filter element and spaced therefrom by a gap. During fluid filtration, as the outer wrap becomes loaded, the amount of fluid flowing through the gap increases, to in turn slow the increase in pressure drop across the filter element, to increase filter capacity and extend filter life. Contaminants release and drain from the end of the outer wrap, at the noted gap, upon excessive loading of the latter to further increase filter capacity and further extend filter life, including disposable filters. In application to reusable cleanable filters, backflushed contaminants release and drain from the end of the outer wrap at the noted gap. The invention has various applications, including engine lubricating oil filters, hydraulic oil filters, fuel filters, coalescers, and the like, including disposable and re-usable types.
- Fig. 1: is a sectional view illustrating a filter constructed in accordance with the invention. and is similar to Figs. 4 and 5 of U.S. Patent 5,779,900.
- Fig. 2: is a schematic sectional view taken along line 2-2 of Fig. 1.
- Fig. 3: is a schematic sectional view taken along line 3-3 of Fig. 3.
- Fig. 4: is a schematic perspective view of a filter element in accordance with the invention.
- Fig. 5: is a sectional view partially cut away of an alternate filter element in accordance with the invention.
- Fig. 6: is like Fig. 5 and shows another embodiment.
- Fig. 7: is a sectional view of another filter element in accordance with the invention.
- Fig. 8: is a schematic sectional view taken along line S-S of Fig. 7.

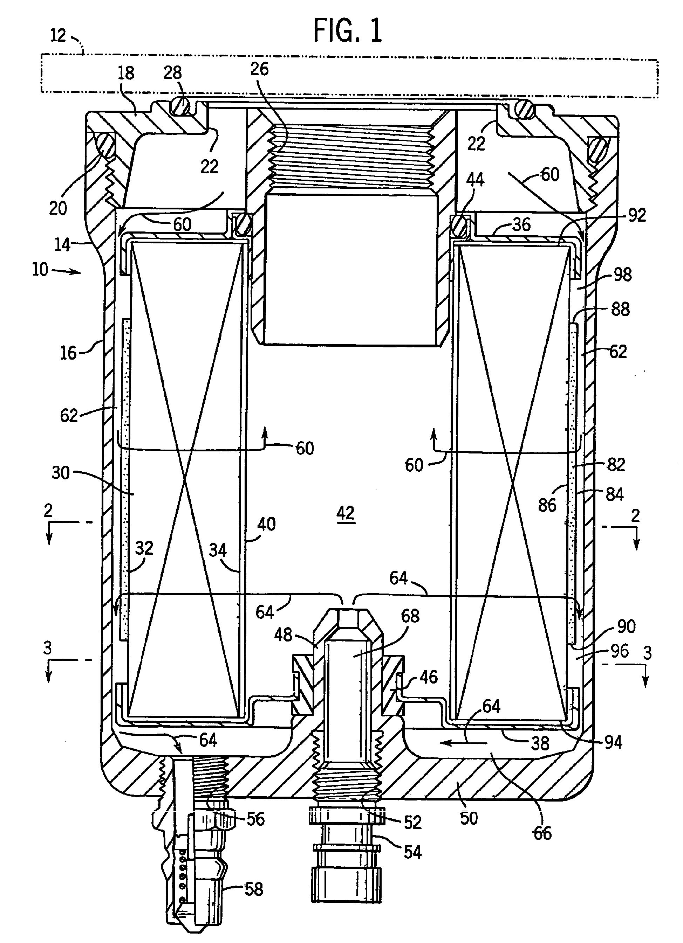

Fig. 1 shows a filter 10 for filtering fluid, such as lubricating oil, from a machine 12, such as an internal combustion engine. Filter housing 14 includes an open-topped cylindrical canister 16 closed by threaded adapter plate 18 in sealing relation at O-ring 20. Adapter plate 18 has a plurality of circumferentially spaced openings 22 providing inlets for receiving fluid from machine 12, for example, engine oil, and having an outlet 26 for returning the fluid to the machine. Outlet 26 is internally threaded for mounting to a mounting boss of an internal combustion engine as is standard. The filter housing at adapter plate 18 is mounted to the engine block in scaling relation at O-ring 28. Mounted within the housing is a fluid filter element 30 provided by pleated filter media having an upstream dirty side 32 and a downstream clean side 34 and filtering fluid passing therethrough from upstream side 32 to downstream side 34, as is standard. The pleated filter media is potted between end caps 36 and 38, and includes an inner perforated metal liner 40 engaging and supporting the inner pleat tips and defining hollow interior 42 of the filter. Upper end cap 36 is sealed to the adapter plate outlet at O-ring 44. Lower end cap 38 is sealed at grommet 46 to a central upstanding stud portion 48 extending axially upwardly from lower end 50 of the housing. The filter housing has a central lower threaded inlet 52 receiving air inlet valve 54 in threaded relation. The filter housing. has a lower threaded outlet 56 receiving a drain valve 58 in threaded relation, all as in U.S. Patent 5,779,900. As noted in U.S. Patent 5,779,900 the filter housing has a first flow path therethrough as shown at arrows 60 from inlets 22 then flowing downwardly through outer annular passage 62 then flowing radially inwardly through pleated filter media element 30 then flowing axially upwardly through outlet 26. The filter housing has a second flow path therethrough as shown at arrows 64 flowing from inlet 52 axially upwardly into hollow interior 42 then radially outwardly and then downwardly through outer annular passage 62 to lower collection chamber 66 to outlet 56 and through drain valve 58. During normal filtering operation during running of the engine, lubricating oil flows along the noted first flow path 60 and is filtered and returned to the engine. With the engine off, a cleaning cycle can be initiated by introducing a cleansing fluid such as air at inlet valve 54 such that air flows along the noted second flow path 64 to backflush and clean pleated filter element 30. An auxiliary filter element 68 within stud portion 48 filters the cleansing fluid such as air. The above described structure and operation is known in the prior art, (U.S. Patent 5,779,900).

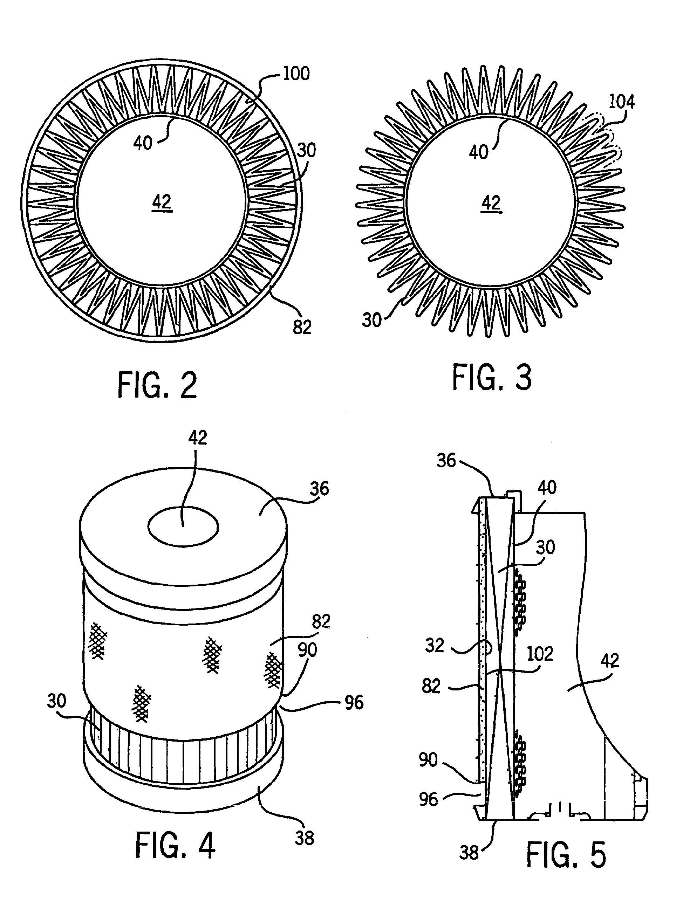

An outer wrap 82 of filter media is provided adjacent and around main filter media 30 along upstream dirty side 32. Outer wrap 82 has an upstream dirty side 84 and a downstream clean side 86 and filters fluid passing therethrough from upstream dirty side 84 to downstream clean side 86. Outer wrap 82 extends axially longitudinally between upper and lower distally opposite ends 88 and 90. Upstream dirty side 32 of main filter media 30 extends axially longitudinally between upper and lower distally opposite ends 92 and 94. The lower end 90 of outer wrap 82 stops short of bottom end cap 38 and lower end 94 of upstream dirty side 32 of main filter media 30 and is spaced therefrom by a longitudinal gap 96. This is further illustrated in Figs. 2 and 3, where the section along line 2-2 shows outer wrap 82, Fig. 2, whereas in Fig. 3 there is no outer wrap at section line 3-3 at gap 96. In Fig. 1, the upper end 88 of outer wrap 82 stops short of top end cap 36 and upper end 92 of the main filter media and is spaced therefrom by longitudinal gap 98. In an alternate embodiment as illustrated in Fig. 4, where like reference numerals are used from above where appropriate to facilitate understanding, outer wrap 82 extends all the way up to upper end 92 of the main filter media, without gap 98 of Fig. 1.

As outer wrap 82 loads during fluid filtration by the flow of fluid along path 60, Fig. 1, the amount of fluid flowing through gap 96 and/or 98 increases, to in turn slow the increase in pressure drop across the filter element, to increase filter capacity and extend filter life.

Furthermore, contaminants collected on outer wrap 82 release and drain from lower end 90 upon excessive loading of the outer wrap, to further increase filter capacity and further extend filter life. In addition, the space 100, Fig. 2, between outer wrap 82 and main filter media 30 provides a storage area and drainage channel between the outer wrap and the main filter media terminating at gap 96, such that contaminants coalesce and collect in such storage area and drain along such channel 100 to gap 96 for release therefrom.

Upon cleaning backflushing as above noted, backflushed contaminants release and drain from lower end 90 of outer wrap 82. Outer wrap 82 is a separator stage providing a barrier to backwashed sludge from main filter media 30, causing such sludge to collect on outer wrap 82 and drain to end 90 thereof. When air is the cleanser fluid, outer wrap 82 forces some of the air to flow longitudinally downwardly from end 92 and 88 along the space between main filter media 30 and outer wrap 82, to increase effectiveness of the cleaning.

Fig. 5 shows a further embodiment and uses like reference numerals from above where appropriate to facilitate understanding. An outer perforated metal liner 102 is provided around main filter media 30 along upstream dirty side 32 and between the outer pleat tips of main filter media 30 and outer wrap 82. Outer liner 102 maintains the outer pleat tips in spaced relation independently of outer wrap 82, and provides a pleat spacer member between and separating and spacing the outer pleat tips, and also between and separating and spacing outer wrap 82 from the outer pleat tips. Alternatively, a pleat spacer may be provided by a corrugated pleated screen along the pleats as shown in partial dashed line at 104 in Fig. 3. In each of the noted embodiments, outer wrap 82 is unattached to the outer pleat tips of main filter media 30. In other embodiments, the outer wrap is held in place by potting or sealing it to one of end caps 36 and 38. In further embodiments, the outer wrap is attached to main filter media 30, for example by applying adhesive bead to the outer pleat tips, or by heat shrinking, or the like.

Main filter media 30 defines a first annulus. Upper and lower ends 92 and 94 of main filter media 30 are distally opposite axial ends of such first annulus. Outer wrap 82 defines a second annulus concentrically surrounding the first annulus. Upper and lower ends 88 and 90 of outer wrap 82 are distally opposite axial ends of the second annulus. Outer wrap 82 has no nonfiltering gaps therealong between ends 88 and 90. Fluid flowing radially through the noted second annulus between ends 88 and 90 is also filtered by the outer wrap. Gap 96 defines a third annulus having a constant axial length (up-down in Figs 1 and 4) along its entire circumference. The noted third annulus is coaxial and colinear with the second annulus. The axial length of the third annulus is less than the axial length of the second annulus. The axial length of gap 96 is preferably 5% to 50% of the axial length of filter media 30. As noted, outer wrap 82 extends axially between ends 88 and 90 and has no nonfiltering gaps therealong including along all axial projections between ends 88 and 90 of outer wrap 82.

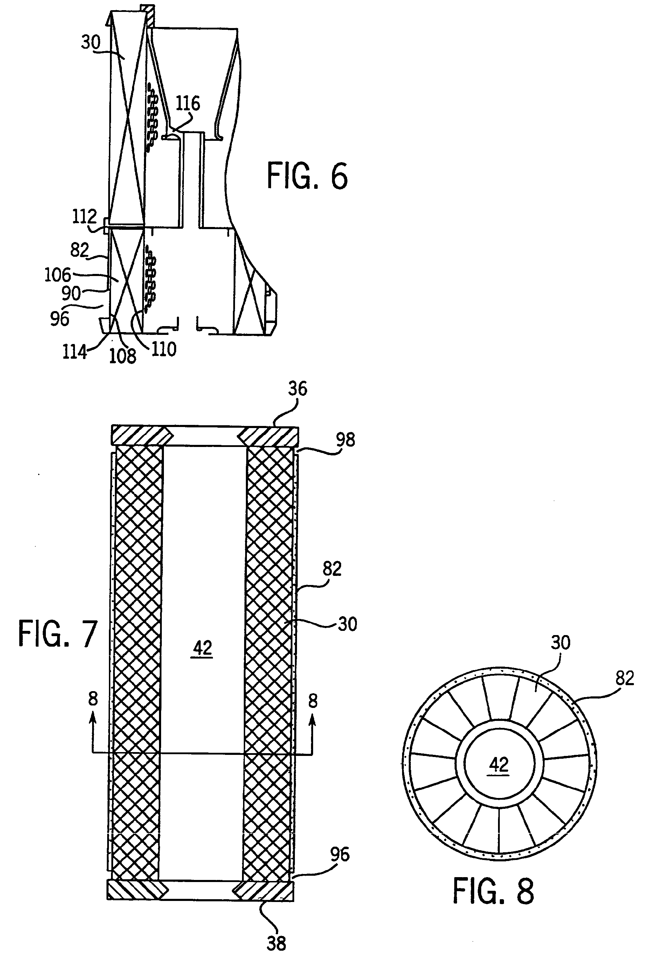

Fig. 6 shows a further embodiment and uses like references numerals from above where appropriate to facilitate understanding. The fluid filter element of Fig. 6 is received in housing 14 of Fig. 1 and includes full-flow filter media 30 as above described, and bypass filter media 106. The bypass filter media has an upstream dirty side 108 and a downstream clean side 110 and filters fluid passing therethrough from upstream dirty side 108 to downstream clean side 110. Upstream dirty side 108 extends longitudinally axially between upper and lower distally opposite ends 112 and 114. Full-flow filter media 30 and bypass filter media 106 extend axially longitudinally and are coaxially aligned. Outer wrap 82 is adjacent and around bypass filter media 106. The outer wrap stops short of lower end 114 of bypass filter media 106 such that lower end 90 of the outer wrap is spaced from lower end 114 of the bypass filter media by gap 96 in which fluid flows through bypass filter media 106 but not through outer wrap 82. The embodiment of Fig. 6 addresses and solves problems of plugging of cleanable reusable filters. Such problem is more common with tight media, such as 2 micron pore size than with loose media such as 10 micron pore size. In order to control oil-borne soot and sludge, a combination full-flow/bypass lubricating oil filter is used. The bypass section 106 has a higher efficiency that full-flow section 30 in order to control the soot and sludge, while the full-flow section is more open and controls primarily hard abrasives. A venturi 116 may be included in the interior of the combination full-flow and bypass filter, as known in the prior art, for example as shown in U.S. Patent 5,695,637. The problem encountered in the prior art is that such a bypass section plugs prematurely. The solution of Fig. 6 overcomes the problem by adding outer wrap 82 to bypass section 106 but stopping the outer wrap short of the lower end of the bypass section at lower end 90 of the outer wrap, to leave the noted gap 96. The bottom 5 to 10% of bypass section 106 is left uncovered at gap 96. This serves two purposes. Firstly, captured soot/sludge can freely drain out of gap 96 to the bottom of the filter, and some portion of the total bypass flow through the bypass section will always pass through this part of media 106. Secondly, as outer wrap 82 becomes loaded and plugged, the total fluid flowing through gap 96 will increase, thus slowing the increase in pressure drop across the bypass section. Both of these aspects have the effect of increasing filter capacity. During air backwash cleaning, outer wrap 82 acts as a separator stage, as above noted, like a coalescer. Such stage acts as a barrier to backwashed sludge, causing it to collect on wrap 82, and drain. The wrap also forces air during cleaning to flow from the top of the element to the bottom as above noted, making the cleaning process more effective.

Figs. 7 and 8 show a further embodiment developed for an in-tank fuel filter, and use like reference numerals from above where appropriate to facilitate understanding. Gaps 98 and 96 are provided at both ends of outer wrap 82 around main filter media 30 between end caps 36 and 38.

Outer wrap 82 is a fibrous porous material, which in some embodiments may be surface media type, and in other embodiments depth media type. Main filter media 30 is preferably pleated filter material though other media may be used. The invention may be used with various filters, including liquid/solid filters, gaseous/solid filters, liquid/liquid separators, and gas/liquid separator elements. The noted gap at 96 enables solid and liquid contaminants to slide or drain off of outer wrap 82 and also away from main filter media 30. Such contaminants drop in landslide fashion during filtering operation during fluid flow along path 60, or are backflushed away from main filter media 30 during a cleaning cycle by cleansing fluid flow along path 64. The axial longitudinal length of gap 96 should be small (49% or less) as compared to the longitudinal axial length of the filter element (51 % or more). Preferably, the axial longitudinal length of gap 96 is about 5 to 10% of the total axial length of the filter element. When fluid flow to the filter element is stopped, the drainage gap 96 allows contaminants to fall freely from lower end 90. This draining of contaminant allows the filter to live longer because it will not be permanently capturing the contaminant. Outer wrap 82 also acts as a barrier and a loading layer for solid and semi-solid contaminants. Wrap 82 also aids a separator element's efficiency in removing liquid contaminant and enhancing the separator's life. The outer wrap acts as a barrier for liquid droplets. Since the outer wrap allows less liquid contaminant to contact main section 30 of the filter, the useful life of the main separator section is extended. Increased dust capacity has also been noted 5 with the disclosed outer wrap. Drainage gap 96 allows landslides of dust to fall off.

## Claims

1. A filter to be mounted below a machine for filtering a non-gaseous fluid like oil, hydraulic oil, fuel, water from the machine, comprising:
a filter housing (14) having an upper end (18) to be mounted to the machine and a lower distally opposite end (50),
the housing (14) at the upper end (18) having a first inlet (22) receiving a first fluid to be filtered from said machine, and a first outlet (26) returning said first fluid to said machine,
the housing (14) at the lower end (50) having a second inlet (52) selectively receiving a second cleansing fluid, and a second outlet (56) exhausting said second fluid,
a fluid filter element (30) mounted in said filter housing (14), said fluid filter element (30) comprising
main filter media (30) having an upstream dirty side (32) and a downstream clean side (34), said first fluid passing therethrough from said upstream dirty side (32) to said downstream clean side (34), said upstream dirty side (32) extending longitudinally between a first upper end (92) at the upper end (18) of the housing (14), and a second lower end (94) at the lower end (50) of the housing (14),
an outer wrap (82) of filter media adjacent said filter media (30) along said upstream dirty side (32), said outer wrap (82) having an upstream dirty side (84) and a downstream clean side (86), said first fluid passing therethrough from the upstream dirty side (84) of the outer wrap (82) to the downstream clean side (86) of the outer wrap (82),
said outer wrap (82) extending longitudinally between a first upper end (88) near the first end (92) of the filter media (30) and a second lower end (90) near the second end (94) of the filter media (30),
wherein said filter media (30) defines a first annulus, said first and second ends (92, 94) of said filter media (30) are distally opposite first and second axial ends of said first annulus,
wherein said outer wrap (82) defines a second annulus concentrically surrounding said first annulus, said first and second ends (88, 90) of said outer wrap (82) are distally opposite first and second axial ends of said second annulus,
wherein said second end (90) of said outer wrap (82) is stopping short of said second end (94) of said upstream dirty side (32) of said main filter media (30) and being spaced therefrom by a longitudinal gap (96), so that said second axial end (90) of said second annulus is axially spaced from said second axial end (94) of said first annulus by said gap (96),
wherein said outer wrap (82) has no non-filtering gaps therealong such that fluid flowing radially through said second annulus is also filtered by said outer wrap (82),
a storage area (100) and drain channel between said outer wrap (82) and said filter media (30) and terminating at said gap (96),
said filter housing (14) having a first flow path (60) therethrough from the first inlet (22) then through said outer wrap (82) and said filter media (30) in one direction then to said first outlet (26),
said filter housing (14) having a second flow path (64) therethrough from said second inlet (52) then through said filter media (30) and said outer wrap (82) in the opposite direction then to said second outlet (56), said second flow path (64) providing backflushing cleaning of said filter by said cleansing fluid flowing along said second path (64), said first and second flow paths (60, 64) having common but opposite direction portions through said filter media (30) and said outer wrap (82) of said fluid filter element,
wherein backflushed contaminants release and drain from said second end (90) of said outer wrap (82) at said gap (96).

2. Fluid filter according to claim 1, wherein said gap (96) defines a third annulus having a constant axial length along its entire circumference, and wherein said third annulus is coaxial and colinear with said second annulus, the axial length of said third annulus being less than the axial length of said second annulus.

3. Fluid filter according to claim 1 or 2, wherein said filter media (30) comprises pleated filter media having pleats with outer pleat tips at said upstream dirty side (32) of said filter media (30) and maintained in spaced relation independently of said outer wrap (82).

4. Fluid filter according to claim 3, comprising a pleat spacer member (102) between and separating and spacing said outer pleat tips, and also between and spacing said outer wrap (82) from said outer pleat tips.

5. Fluid filter according to claim 3 or 4, wherein said outer wrap is unattached to said outer pleat tips.

## Patentansprüche

1. Filter zur Befestigung unterhalb einer Maschine zur Filterung eines nicht gasförmigen Fluids wie Öl, Schmieröl, Kraftstoff, Wasser von der Maschine, aufweisend:
ein Filtergehäuse (14) mit einem oberen Ende (18) zur Befestigung an der Maschine und einem unteren distal gegenüberliegenden Ende (50),
wobei das Gehäuse (14) an dem oberen Ende (18) einen ersten Einlaß (22) aufweist, der ein erstes zu filterndes Fluid von der Maschine aufnimmt, und einen ersten Auslaß (26), der das erste Fluid zu der Maschine zurückführt,
wobei das Gehäuse (14) an dem unteren Ende (50) einen zweiten Einlaß (52) aufweist, der selektiv ein zweites Reinigungsfluid aufnimmt, und einen zweiten Auslaß (56), der das zweite Fluid abführt,
ein Fluidfilterelement (30), das an dem Filtergehäuse (14) befestigt ist, wobei das Fluidfilterelement (30) aufweist
ein Hauptfiltermaterial (30) mit einer stromaufwärtigen schmutzigen Seite (32) und einer stromabwärtigen sauberen Seite (34), wobei das erste Fluid **dadurch** strömt von der stromaufwärtigen schmutzigen Seite (32) zu der stromabwärtigen sauberen Seite (34), wobei sich die stromaufwärtige schmutzige Seite (32) longitudinal zwischen einem ersten oberen Ende (92) an dem oberen Ende (18) des Gehäuses (14) und einem zweiten unteren Ende (94) an dem unteren Ende (50) des Gehäuses (14) erstreckt,
einen äußeren Mantel (82) aus Filtermaterial angrenzend an das Filtermaterial (30) entlang der stromaufwärtigen schmutzigen Seite (32), wobei der äußere Mantel (82) eine stromaufwärtige schmutzige Seite (84) und eine stromabwärtige saubere Seite (86) aufweist, wobei das erste Fluid von der stromaufwärtigen schmutzigen Seite (84) des äußeren Mantels (82) zu der stromabwärtigen sauberen Seite (86) des äußeren Mantels (82) hindurchströmt,
wobei sich der äußere Mantel (82) longitudinal zwischen einem ersten oberen Ende (88) neben dem ersten Ende (92) des Filtermaterials (30) und einem zweiten unteren Ende (90) neben dem zweiten Ende (94) des Filtermaterials (30) erstreckt,
wobei das Filtermaterial (30) einen ersten Ring definiert, wobei das erste und das zweite Ende (92, 94) des Filtermaterials (30) distal gegenüberliegende erste und zweite axiale Enden des ersten Ringes sind,
wobei der äußere Mantel (82) einen zweiten Ring definiert, der den ersten Ring konzentrisch umgibt, wobei das erste und das zweite Ende (88, 90) des äußeren Mantels (82) distal gegenüberliegende erste und zweite axiale Enden des zweiten Ringes sind,
wobei das zweite Ende (90) des äußeren Mantels (82) kurz vor dem zweiten Ende (94) der stromaufwärtigen schmutzigen Seite (32) des Hauptfiltermaterials (30) endet und davon durch einen longitudinalen Abstand (96) beabstandet ist, so daß das zweite axiale Ende (90) des zweiten Rings axial von dem zweiten axialen Ende (94) des ersten Rings durch den Abstand (96) beabstandet ist,
wobei der äußere Mantel (82) keine nicht filternden Abstände dort entlang aufweist, so daß Fluid, das radial durch den zweiten Ring strömt, auch von dem äußeren Mantel (82) gefiltert wird,
eine Speicherfläche (100) und einen Abflußkanal zwischen dem äußeren Mantel (82) und dem Filtermaterial (30) und endend an dem Abstand (96),
wobei das Filtergehäuse (14) einen ersten Strömungsweg (60) **dadurch** aufweist von dem ersten Einlaß (22) dann durch den äußeren Mantel (82) und das Filtermaterial (30) in einer Richtung, dann durch den ersten Auslaß (26),
wobei das Filtergehäuse (14) einen zweiten Strömungsweg (64) **dadurch** aufweist, von dem zweiten Einlaß (52), dann durch das Filtermaterial (30) und den äußeren Mantel (82) in der entgegengesetzten Richtung, dann durch den zweiten Auslaß (56), wobei der zweite Strömungsweg (64) eine Rückspülungsreinigung des Filters bereitstellt durch die Strömung des Reinigungsfluids entlang des zweiten Strömungswegs (64),
wobei der erste und der zweite Strömungsweg (60, 64) gemeinsame Abschnitte aber in entgegengesetzter Richtung durch das Filtermaterial (30) und den äußeren Mantel (82) des Fluidelements aufweisen,
wobei rückgespülte Schmutzstoffe freigegeben und von dem zweiten Ende (90) des äußeren Mantels (82) an dem Abstand (96) abgeleitet werden.

2. Fluidfilter nach Anspruch 1, wobei der Abstand (96) einen dritten Ring definiert, der eine konstante axiale Länge entlang des gesamten Umfangs aufweist, wobei der dritte Ring koaxial und kolinear zu dem zweiten Ring verläuft und wobei die axiale Länge des dritten Rings geringer ist als die axiale Länge des zweiten Rings.

3. Fluidfilter nach Anspruch 1 oder 2, wobei das Filtermaterial (30) ein gefaltetes Filtermaterial aufweist, das Falten mit äußeren Faltenspitzen an der strom-aufwärtigen schmutzigen Seite (32) des Filtermaterials (30) aufweist und in beabstandeter Verbindung unabhängig von dem äußeren Mantel (82) behält.

4. Fluidfilter nach Anspruch 3, aufweisend ein Faltenabstandsteil (102) zwischen den äußeren Faltenspitzen, diese trennend und beabstandend und auch zwischen dem äußeren Mantel (82) und den äußeren Faltenspitzen, diese beabstandend.

5. Fluidfilter nach Anspruch 3 oder 4, wobei der äußere Mantel die äußeren Faltenspitzen nicht berührt.

## Revendications

1. Filtre à monter en dessous d'une machine pour filtrer un fluide non gazeux tel que de l'huile, de l'huile hydraulique, du carburant, de l'eau de la machine, comprenant :
un logement de filtre (14) présentant une extrémité supérieure (18) à monter sur la machine et une extrémité inférieure opposée de manière distale (50),
le logement (14) au niveau de l'extrémité supérieure (18) présentant une première entrée (22) recevant un premier fluide à filtrer de ladite machine, et une première sortie (26) retournant ledit premier fluide à ladite machine,
le logement (14) au niveau de l'extrémité inférieure (50) présentant une deuxième entrée (52) recevant de manière sélective un deuxième fluide de nettoyage, et une deuxième sortie (56) évacuant ledit deuxième fluide,
un élément de filtre fluidique (30) monté dans ledit logement de filtre (14), ledit élément de filtre fluidique (30) comprenant :
un médium filtrant principal (30) présentant un côté sale d'amont (32) et un côté propre d'aval (34), ledit premier fluide y passant au travers à partir du côté sale d'amont (32) jusqu'au côté propre d'aval (34), ledit côté sale d'amont (32) s'étendant de manière longitudinale entre une première extrémité supérieure (92) au niveau de l'extrémité supérieure (18) du logement (14), et une deuxième extrémité inférieure (94) au niveau de l'extrémité inférieure (50) du logement (14),
Une enveloppe externe (82) d'un médium filtrant adjacent audit médium filtrant (30) le long dudit côté sale d'amont (32), ladite enveloppe externe (82) présentant un côté sale d'amont (84) et un côte propre d'aval (86), ledit premier fluide y passant au travers depuis le côte sale d'amont (84) de l'enveloppe externe (82) jusqu'au côté propre aval (86) de l'enveloppe externe (82),
ladite enveloppe externe (82) s'étendant de manière longitudinale entre une première extrémité supérieure (88) à proximité de la première extrémité (92) du médium filtrant (30) et une deuxième extrémité inférieure (90) à proximité de la deuxième extrémité (94) du médium filtrant (30),
dans lequel ledit médium filtrant (30) définit un premier anneau, lesdites première et deuxième extrémités (92, 94) dudit médium filtrant (30) sont opposées de manière distale aux première et deuxième extrémités axiales dudit premier anneau,
dans lequel ladite enveloppe externe (82) définit un deuxième anneau entourant de manière concentrique le premier anneau, lesdites première et deuxième extrémités (88, 90) de ladite enveloppe externe (82) sont opposées de manière distale aux première et deuxième extrémités axiales dudit deuxième anneau,
dans lequel ladite deuxième extrémité (90) de ladite enveloppe externe (82) s'arrête à proximité de ladite deuxième extrémité (94) dudit côté sale d'amont (32) dudit médium filtrant principal (30) et étant espacé de celle-ci par un espace longitudinal (96), de sorte que ladite deuxième extrémité axiale (90) dudit deuxième anneau est espacée de manière axiale de ladite première extrémité axiale (94) dudit premier anneau par ledit espace (96),
dans lequel ladite enveloppe externe (82) ne présente aucun espace non filtrant sur sa longueur de sorte que le fluide circulant de manière radiale au travers dudit deuxième anneau est également filtré par ladite enveloppe externe (82),
une surface de stockage (100) et un canal d'évacuation entre ladite enveloppe externe (82) et ledit médium filtrant (30) et se terminant au niveau dudit espace (96),
ledit logement de filtre (14) présentant un premier chemin d'écoulement (60) en son travers à partir de la première entrée (22), puis au travers de ladite enveloppe externe (82) et dudit médium filtrant (30) dans une direction ensuite vers ladite première sortie (26),
ledit logement de filtre (14) présentant un deuxième chemin d'écoulement (64) en son travers à partir de ladite deuxième entrée (52), puis au travers dudit médium filtrant (30) et de ladite enveloppe externe (82) dans la direction opposée alors à ladite deuxième sortie (56), ledit deuxième chemin d'écoulement (64) fournissant un nettoyage en circulation inverse dudit filtre par ledit fluide de nettoyage circulant le long dudit deuxième chemin (64), lesdits premier et deuxième chemins d'écoulement (60, 64) présentant des parties communes mais de direction opposée au travers dudit médium filtrant (30) et de ladite enveloppe externe (82) dudit élément de filtre fluidique,
dans lequel des agents de contamination en circulation inverse sont libérés et évacués de ladite deuxième extrémité (90) de ladite enveloppe externe (82) au niveau dudit espace (96).

2. Filtre fluidique selon la revendication 1, dans lequel ledit espace (96) définit un troisième anneau présentant une longueur axiale constante le long de sa circonférence complète, et dans lequel ledit troisième anneau est coaxial et colinéaire avec le deuxième anneau, la longueur axiale dudit troisième anneau étant inférieure à la longueur axiale dudit deuxième anneau.

3. Filtre fluidique selon la revendication 1 ou la revendication 2, dans lequel ledit médium filtrant (30) comprend un médium filtrant plissé présentant des plis avec des pointes de pli externes au niveau du côté sale d'amont (32) dudit médium filtrant (30) et maintenus dans une relation espacée indépendamment de ladite enveloppe externe (82).

4. Filtre fluidique selon la revendication 3, comprenant un espaceur de plis (102) entre et séparant et espaçant lesdites pointes de plis externes, et également entre et espaçant ladite enveloppe externe (82) desdites pointes de plis externes.

5. Filtre fluidique selon la revendication 3 ou la revendication 4, dans lequel ladite enveloppe externe n'est pas attachée auxdites pointes de plis externes.
